# EUROPÄISCHE PATENTANMELDUNG

(11) **EP 1 172 642 A2**
(43) Veröffentlichungstag der Anmeldung: **16.01.2002**
(21) Anmeldenummer: 01114955.6
(22) Anmeldetag: 20.06.2001
(51) Int. Cl.: G01N 21/21

(54) **Spektralellipsometer mit einer refraktiven Beleuchtungsoptik**

(30) Priorität: 11.07.2000 DE 10033645
(71) Anmelder: Leica Microsystems Wetzlar GmbH, 35578 Wetzlar (DE)
(72) Erfinder: Danner, Lambert, 35584 Wetzlar-Naunheim (DE); Wienecke, Joachim, Dr., 07747 Jena (DE)
(74) Vertreter: Reichert, Werner F., Dr.

(57) **Zusammenfassung**

Die Erfindung betrifft ein Spektralellipsometer mit einer refraktiven Beleuchtungsoptik (3), die mit einer niedrigen Beleuchtungsapertur versehen und für einen großen Wellenlängenbereich ausgelegt ist. Durch die Farbkorrektur der Beleuchtungsoptik (3) wird ein sehr kleiner Messspot (6) auf einer Objektoberfläche (4) erzeugt.

## Beschreibung

Die Erfindung betrifft ein Spektralellipsometer mit einer refraktiven Beleuchtungsoptik entsprechend den Merkmalen im Oberbegriff des Anspruchs 1.

Ellipsometer beruhen auf einem zerstörungsfreien optischen Messverfahren, bei dem die Änderung des Polarisationszustandes eines an einer Objektoberfläche reflektierten Lichtbündels gemessen wird. Hierzu wird im Ellipsometer Licht mit einem definierten Polarisationszustand erzeugt und als möglichst paralleler Lichtstrahl unter einem bestimmten Winkel auf die Objektoberfläche gerichtet. Auf der Objektoberfläche entsteht ein Beleuchtungsfleck, der als Messspot bezeichnet wird. Das vom Messspot reflektierte Licht besitzt entsprechend den Eigenschaften der Objektoberfläche einen veränderten Polarisationszustand (Polarisationsellipse), der mit Hilfe eines Polarisations-Analysators mit nachfolgendem Fotodetektor gemessen wird. Daraus können Brechungsindex und Absorptionskoeffizient der Oberfläche oder/und die Dicke einer Oberflächenschicht bestimmt werden. Bei den vielfach gebräuchlichen Ein-Wellenlängen-Ellipsometern wird monochromatisches Licht meist im sichtbaren Wellenlängenbereich verwendet.

Bei Spektralellipsometern wird Licht verschiedener Wellenlängen genutzt. Durch die ellipsometrische Messung bei verschiedenen Wellenlängen können komplexe Strukturen wie Vielfachschichten, inhomogene oder anisotrope Schichten etc. analysiert werden. Es können die Brechungsindizes und die Absorptionskoeffizienten mehrerer übereinander liegender dünner transparenter Oberflächenschichten und / oder deren Schichtdicken bestimmt werden.

Anstelle verschiedener Wellenlängen können auch verschiedene Einfallswinkel des Lichtbündels auf die Objektoberfläche genutzt werden. Eine Vielzahl von unterschiedlichen Einfallswinkeln liefert eine ausreichende Anzahl von Messwerten, um alle Materialparameter der Oberflächenschichten berechnen zu können.

Insbesondere bei der Herstellung von Halbleiterschaltkreisen auf Wafern spielt die Bestimmung der Materialparameter von Oberflächenschichten eine wichtige Rolle. Deshalb werden im Produktionsprozess von integrierten Schaltkreisen unter anderem Ellipsometer eingesetzt, um beispielsweise die Schichtdicken der Oberflächenschichten zu ermitteln. Die fortschreitende Miniaturisierung intergrierter Schaltkreise bedingt auch einen entsprechend kleinen Messpot.

Aus den Prospekten der Firma Sopra (www.sopra-sa.com vom 21.10.1999) ist ein Spektralellipsometer bekannt, dessen Beleuchtungsstrahl einen Durchmesser von 3 mm besitzt. Für die Untersuchung sehr kleiner Probenflächen kann der Beleuchtungsstrahl auf einen Mikrospot mit den Dimensionen 100 µm x 150 µm fokussiert werden.

Aus der US 5 166 752 ist ein Ellipsometer bekannt, bei dem parallele Lichtstrahlen in einem Strahlenbündel mit Hilfe einer hohen Apertur einer Beleuchtungslinse in konvergierende Lichtstrahlen umgewandelt und dadurch mit unterschiedlichen Einfallswinkeln auf eine Probe gerichtet werden. Die von der Probe mit entsprechend unterschiedlichen Winkeln reflektierten Lichtstrahlen werden mit einem ortsauflösendenden Detektor simultan detektiert, wodurch eine schnelle Erfassung einer Vielzahl von Daten aus den unterschiedlichen Winkeln ermöglicht wird. Durch die Verwendung der hochaperturigen Beleuchtungslinse ist ein kleiner Messspot erreichbar, der aber bekanntermaßen um so kleiner ausfällt, je größer der Aperturwinkel der Lichtstrahlen ist, also je stärker die Lichtstrahlen konvergieren. Neben dem Betrieb mit monochromatischem Licht kann das Ellipsometer bei einer anderen Ausführungsform mit polychromatischem Licht betrieben werden.

Aus der US 5 608 526 ist ein Spektralellipsometer bekannt, bei dem ausschließlich reflektive optische Elemente im Strahlengang zwischen dem Polarisator und Analysator des Ellipsometers eingesetzt werden und mit dem kleine Messspots erzielt werden können. Als Grund für die Verwendung einer reflektiven anstelle einer refraktiven Optik wird angegeben, dass bei der Ellipsometeranwendung eine Transmissionsoptik für eine breitbandige UV-Strahlung oder für eine Strahlung von UV bis nahes Infrarot nicht geeignet sei.

Es ist die Aufgabe der Erfindung, ein Spektralellipsometer mit einer Transmissionsoptik anzugeben, mit dem über einen großen Spektralbereich hinweg - von UV bis nahem Infrarot - auf der Oberfläche eines Objektes ein möglichst kleiner, scharf abgegrenzter Messspot erzeugt werden kann, dessen Durchmesser oder dessen Längen- und Breitenabmessung auf der Objektoberfläche geringer als 100 µm ist.

Diese Aufgabe wird erfindungsgemäß durch das im Kennzeichen des Anspruchs 1 angegebene Merkmal gelöst. Vorteilhafte Ausgestaltungen und Weiterbildungen der Erfindung ergeben sich aus den Unteransprüchen.

Erfindungsgemäß wurde erkannt, dass die bisherige minimal erreichbare Größe des Messspots bei Spektralellipsometern nicht durch sphärische Fehler, Astigmatismus, Verzeichnung oder andere Bildfehler der Beleuchtungsoptik oder durch die vohandene Divergenz des Lichtstrahlenbündels begrenzt ist, sondern die Begrenzung durch die chromatischen Fehler der Beleuchtungsoptik verursacht wird. Die dementsprechend hergestellte farbkorrigierte Beleuchtungsoptik liefert einen Messspot deutlich unter 100 µm bis in den Bereich von unter 50 µm Durchmesser für einen großen Spektralbereich vom ultravioletten Licht über sichtbares Licht bis zum nahen Infrarot.

Bereits mit einem Linsenduplett wird eine gute Farbkorrektur und eine dadurch deutlich verringerte Spotgrösse erreicht. Dabei wird die Apertur des Linsendupletts gering gehalten. Die Eintritts- und Austrittsapertur des voll ausgeleuchteten Linsendupletts wird durch die freie Öffnung der Linsen bestimmt und daraus ergibt sich der Winkelbereich des auf die Objektoberfläche fallenden Beleuchtungsstrahlenbündels. Mit einer geringen Beleuchtungsapertur werden genaue ellipsometrische Messergebnisse und zudem kurze Rechenzeiten für die Auswertung der ellipsometrischen Messungen erreicht. Die Forderung nach genauen und schnellen Messungen werden z.B. in der Fertigungslinie bei der Halbleiterherstellung gestellt, um einen hohen Produktdurchsatz zu erzielen.

Allerdings bewirkt eine zu kleine Apertur Beugungseffekte aufgrund der äußeren Begrenzung der Belichtungsoptik, wodurch der Rand des Messspots unscharf wird. Die unscharfen Randbereiche können aber unbeabsichtigt Gebiete beleuchten, die zum eigentlichen Messort benachbart sind. Das in diesem Fall erzeugte Falschlicht führt unter Umständen zu fehlerhaften Messungen.

Unscharfe Beleuchtungsbereiche werden demnach durch eine Beleuchtungsapertur vermieden, die keine wesentlichen Beugungseffekte zeigt. Für eine solche etwas größere Beleuchtungsapertur ist unter Umständen die Farbkorrektur durch ein Linsenduplett nicht ausreichend. Es hat sich herausgestellt, dass bei einem Kompromiss für eine geeignete Größe der Beleuchtungsapertur eine für den Einsatz im Spektralellipsometer optimale Farbkorrektur mit einem Linsentriplett erreichbar ist. Damit wird ein ausreichend kleiner und scharfer Messspot erzeugt, der sogar unter 50 µm Durchmesser liegen kann.

Selbstverständlich kann auch eine größere Anzahl entsprechender Linsen für die farbkorrigierte Beleuchtungsoptik verwendet werden, wodurch die Korrektur der chromatischen Aberration und auch andere Bildfehler weiter verbessert werden können. Eine Mehrfach-Linsenanordnung bedeutet andererseits natürlich eine etwas geringere Gesamttransmission und einen höheren Konstruktions- und Kostenaufwand.

Die einzelnen Linsen der farbkorrigierten Beleuchtungsoptik können über eine präzise gearbeitete Fassung zueinander ausgerichtet und in bestimmten Abständen zueinander gehalten werden. Vorzugsweise werden die Linsen derart hergestellt, dass sie miteinander verkittet werden und so eine kompakte Einheit bilden können. Natürlich muss der Kitt wie auch das Linsenmaterial das Licht im genannten Wellenlängenbereich, insbesondere auch im UV-Bereich ausreichend gut transmittieren. Eine zudem aufgebrachte Anti-Reflexbeschichtung der Linsen erhöht noch die Transmission, wobei erreicht werden konnte, dass die sonst auftretenden unerwünschten Änderungen des Polarisationszustandes des Lichts besonders bei der Brechung an den Luft-Glas-Grenzflächen weitgehend reduziert sind.

Für den Empfang der von der Objektoberfläche reflektierten Messstrahlung kann ebenfalls vorteilhafterweise eine farbkorrigierte Optik als Empfangsoptik im Messstrahlengang des Ellipsometers verwendet werden. Durch die Farbkorrektur wird eine gleichmäßige Ausleuchtung des Detektors in einer Detektoreinheit des Ellipsometers erreicht. Damit werden starke Intensitätsunterschiede zwischen benachbarten Punkten auf dem Detektor vermieden. Auch alternativ bei einem Einsatz von Lichtleitfasern, die innerhalb der Detektoreinheit das empfangene Licht zum Detektor führen, ist eine gleichmäßige Ausleuchtung der Eingänge der Lichtleitfasern von Vorteil. In gleicher Weise vorteilhaft ist auch eine gleichmäßige Ausleuchtung des Monochromators, der die spektrale Zerlegung des Lichts in der Detektoreinheit des Spektralellipsometers bewirkt.

Durch den Einsatz der farbkorrigierten refraktiven Beleuchtungsoptik in herkömmlichen Spektralellipsometern können in einem großen Wellenlängenbereich mikroskopisch kleine Flächen ellipsometrisch untersucht werden. Dies ist von besonderer Bedeutung bei beschichteten Halbleiteroberflächen zur Herstellung von integrierten Schaltkreisen. Hier können durch die erfindungsgemäße Beleuchtungsoptik Materialeigenschaften und Schichtdicken der Oberflächenschichten auf wesentlich kleineren Flächenbereichen bestimmt werden, als es bisher mit herkömmlichen Spektralellipsometern möglich war.

Im folgenden werden Ausführungsbeispiele der Erfindung anhand der Zeichnung näher erläutert. Es zeigt:
- Fig.1: eine schematische Darstellung eines Ellipsometers mit einer farbkorrigierten refraktiven Beleuchtungsoptik,
- Fig.2: eine schematische Darstellung eines Ellipsometers mit einer farbkorrigierten refraktiven Beleuchtungs- und Empfangsoptik und
- Fig.3: eine schematische Darstellung eines Ellipsometers mit Linsendupletts als Beleuchtungs- und Empfangsoptik.

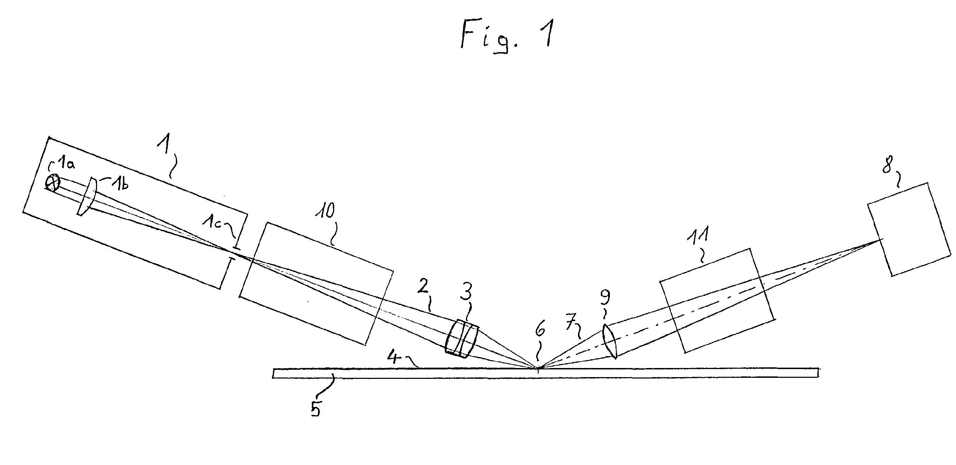

Die Figur 1 zeigt schematisch den Aufbau eines Spektralellipsometers mit einer Beleuchtungseinheit 1, einer Polarisatorgruppe 10, einer Analysatorgruppe 11 und einer Detektoreinheit 8. In der Beleuchtungseinheit 1 wird Licht von einer oder mehreren Lichtquellen 1a erzeugt und mittels eines Kollektors 1b eine Feldblende 1c ausgeleuchtet. Der Wellenlängenbereich des Lichtes erstreckt sich dabei von UV über sichtbares Licht bis einschließlich Licht im nahen Infrarotbereich. Das von der Beleuchtungseinheit 1 erzeugte Beleuchtungsstrahlenbündel 2 gelangt in die Polarisatorgruppe 10, in der es in einen definierten Polarisationszustand gebracht wird.

Das Beleuchtungsstrahlenbündel 2 beleuchtet mittels einer Beleuchtungsoptik 3 eine Oberfläche 4 eines Objektes 5 in einem Messspot 6. Im Messspot 6 wird das Licht von der Objektoberfläche 4 reflektiert und bildet ein Messstrahlenbündel 7. Eine Abbildungsoptik 9 dient der Fokussierung des Messstrahlenbündels 7. Nach dem Durchgang durch eine Analysatorgruppe 11 wird das Messstrahlenbündel 7 von einer Detektoreinheit 8 empfangen und detektiert. Der Polarisationszustand des Messstrahlenbündels 7 wird mittels der Analysatorgruppe 11 und der Detektoreinheit 8 analysiert.

Erfindungsgemäß wird eine farbkorrigierte refraktive Beleuchtungsoptik 3 im Strahlengang des Beleuchtungsstrahlenbündels 2 angeordnet. Dabei wird das Licht im Beleuchtungsstrahlenbündel 2 mit einem nur kleinen Winkelbereich der Beleuchtungsapertur auf die Oberfläche 4 gerichtet.

Die erfindungsgemäße farbkorrigierte Beleuchtungsoptik 3 ist in dem Ausführungsbeispiel der Fig.1 ein Linsentriplett. Dieses besteht aus drei Linsen als refraktive optische Elemente mit unterschiedlichen Brechungseigenschaften, die derart gestaltet sind, dass insbesondere der Farblängsfehler, der beim Durchgang von Licht mit unterschiedlichen Wellenlängen durch die refraktiven Optikelemente entsteht, korrigiert ist und einen entsprechend kleiner Fokusfleck als Messspot 6 erzeugt wird.

Linsentripletts an sich sind bekannt und dienen allgemein einer verbesserten Abbildung eines Gegenstandes durch Reduzierung von optischen Fehlern wie sphärischen oder chromatischen Aberrationen. Beim Erfindungsgegenstand wurde erkannt, dass in einem herkömmlichen Ellipsometer mit refraktiver Beleuchtungsoptik der Messspot auf eine Größe von 100 µm bis 200 µm Durchmesser aufgrund des Farblängsfehlers begrenzt ist. In diesem Größenbereich des Messspots bildet der Farblängsfehler den größten Fehleranteil. Mit dem entsprechend farbkorrigierten Linsentriplett 3 ist es gelungen, die Größe des Messspots auf unter 50 µm Durchmesser zu verkleinern. Dies entspricht einer Flächenreduzierung des Messspots um wenigstens einen Faktor 4. Damit können die Forderungen nach ellipsometrischen Messungen mit sehr kleinen Spotgrößen bei gleichzeitig sehr großem Wellenlängenbereich mittels einer refraktiven Beleuchtungsoptik erfüllt werden.

Das in diesem Ausführungsbeispiel gemäß Figur 1 gezeigte Linsentriplett 3 ist verkittet. Sowohl der Kitt als auch das Glasmaterial der Linsen sind für den großen Wellenbereich entsprechend ausgelegt. Insbesondere wird für den UV-Bereich eine hohe Transmission erreicht. Dies ist notwendig, da viele für Ellipsometer geeignete UV-Lichtquellen nur eine relativ geringe Lichtintensität im UV-Bereich emittieren.

Auch eine Anti-Reflexbeschichtung des Linsentripletts 3 trägt zu einer verbesserten Transmission bei. Anti-Reflexschichten zur Erhöhung der Transmission von refraktiven Optiken sind zwar allgemein bekannt, jedoch muss der Einfluss der Beschichtung auf den Polarisationszustand des transmittierten Lichtes beachtet werden. Dieser Einfluss ist beim Linsentriplett 3 so weit reduziert, dass die Genauigkeit der ellipsometrischen Messungen dadurch nicht verändert ist.

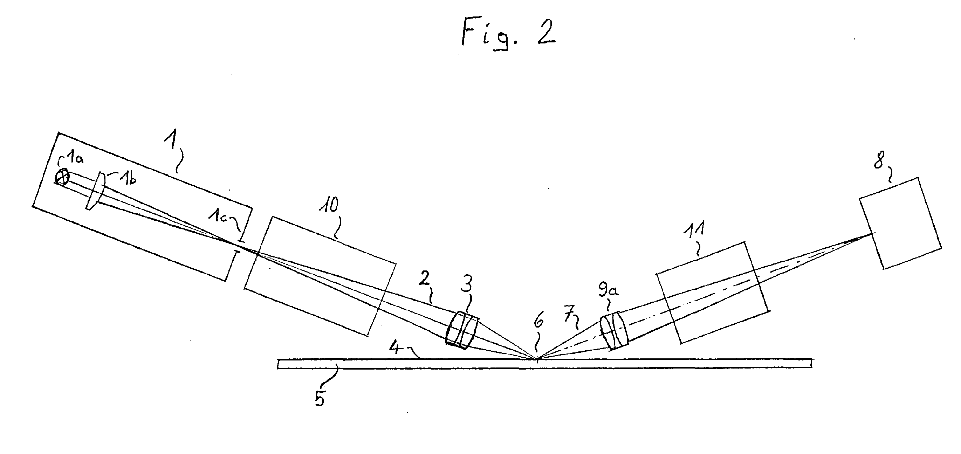

Figur 2 zeigt zusätzlich zu der farbkorrigierten Beleuchtungsoptik 3 auch eine im Messstrahlenbündel 7 angeordnete farbkorrigierte Empfangsoptik 9a, die die herkömmliche Abbildungsoptik 9 ersetzt. Die Empfangsoptik 9a ist in diesem Ausführungsbeispiel ebenfalls aus drei Linsen als refraktive optische Elemente aufgebaut. Dabei kann die Empfangsoptik 9a vorteilhafterweise identisch mit der Beleuchtungsoptik 3 aufgebaut werden. In diesem Fall wird sie beispielsweise gegenüber der Beleuchtungsoptik 3 spiegelsymmetrisch um den Messspot 6 angeordnet. Die farbkorrigierte Beleuchtungsoptik 3 und Empfangsoptik 9a werden vorzugsweise derart aufgebaut, dass sie von polarisationsverändernden Wirkungen frei sind. Andernfalls wäre eine Kalibrierung durchzuführen. Die Farbkorrektur der Empfangsoptik 9a bewirkt unter anderem eine homogene Ausleuchtung des Eingangs der Detektoreinheit 8.

Selbstverständlich können die farbkorrigierte Beleuchtungsoptik 3 und Empfangsoptik 9a auch aus mehr als 3 Linsen bestehen, um weitere Korrekturen und eine weiter verbesserte Abbildung zu erhalten.

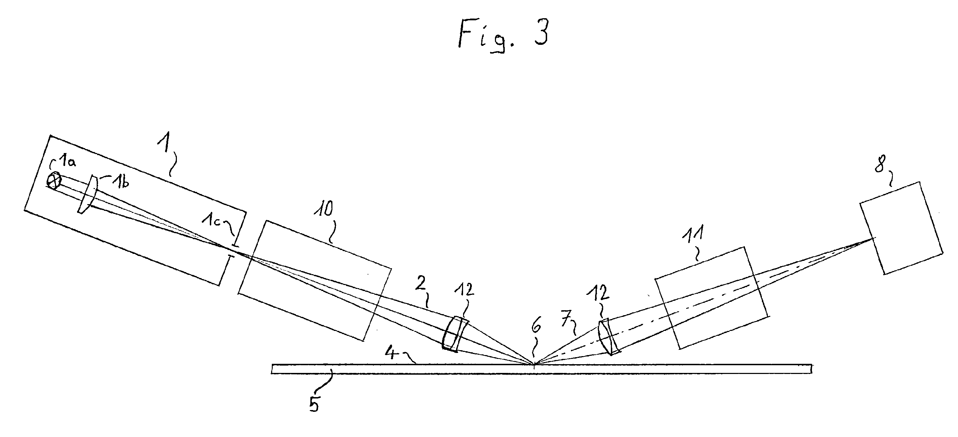

Fig. 3 zeigt dieselbe Anordnung mit einem Spektralellipsometer wie Fig.2, wobei Linsendupletts 12 anstelle von Linsentripletts (Beleuchtungsoptik 3, Empfangsoptik 9a) im Beleuchtungs- und Empfangsstrahlengang eingesetzt sind. Die Apertur der Linsendupletts 12 ist etwas geringer als die in Fig.2 beschriebenen Linsentripletts, wodurch einerseits die Ellipsometerauswertung etwas erleichtert wird. Andererseits kann im Vergleich zum Linsentripplett die Farbkorrektur und damit die geringe Messspotgröße nicht ganz erreicht werden.

### Bezugszeichenliste

- 1: Beleuchtungseinheit
- 1a: Lichtquelle, Lichtquellen
- 1b: Kollektor
- 1c: Feldblende
- 2: Beleuchtungsstrahlenbündel
- 3: farbkorrigierte Beleuchtungsoptik
- 4: Objektoberfläche
- 5: Objekt
- 6: Messspot
- 7: Empfangsstrahlenbündel
- 8: Detektoreinheit
- 9: Abbildungsoptik
- 9a: farbkorrigierte Empfangsoptik
- 10: Polarisatorgruppe
- 11: Analysatorgruppe
- 12: Linsenduplett

## Patentansprüche

1. Spektralellipsometer mit einer refraktiven Beleuchtungsoptik (3) für ein von einer Beleuchtungseinheit (1) kommendes Beleuchtungsstrahlenbündel (2) zur Erzeugung eines Messspots (6) auf einer Oberfläche (4) eines Objektes (5) und mit einer Detektoreinheit (8), die das am Ort des Messspots (6) von der Oberfläche (4) reflektierte Licht als Messstrahlenbündel (7) empfängt und detektiert, **dadurch gekennzeichnet, dass** die Beleuchtungsoptik (3) farbkorrigiert ist.

2. Spektralellipsometer nach Anspruch 1, **dadurch gekennzeichnet, dass** eine Empfangsoptik (9a) für das Messstrahlenbündel (7) vorgesehen ist, die farbkorrigiert ist.

3. Spektralellipsometer nach Anspruch 1 oder 2, **dadurch gekennzeichnet, dass** die farbkorrigierte Beleuchtungsoptik (3) oder / und die farbkorrigierte Empfangsoptik (9a) ein Linsenduplett oder ein Linsentriplett ist.

4. Spektralellipsometer nach einem der vorherigen Ansprüche, **dadurch gekennzeichnet, dass** die farbkorrigierte Beleuchtungsoptik (3) und die farbkorrigierte Empfangsoptik (9a) aus Glas mit einer hohen Transmission im UV-Bereich besteht und / oder eine Anti-Reflexbeschichtung aufweisen.

5. Spektralellipsometer nach einem der vorherigen Ansprüche, **dadurch gekennzeichnet, dass** die farbkorrigierte Beleuchtungsoptik (3) oder / und die farbkorrigierte Empfangsoptik (9a) aus einzelnen refraktiven optischen Elementen aufgebaut ist, die mit einem Kitt mit hoher Transmission im UV-Bereich verbunden sind.

6. Spektralellipsometer nach einem der vorherigen Ansprüche, **dadurch gekennzeichnet, dass** es zur Messung von Materialparametern von dünnen auf der Objektoberfläche (4) aufgebrachten Schichten verwendet wird.
